# EUROPEAN PATENT SPECIFICATION

(11) **EP 2 806 266 B1**
(45) Date of publication and mention of the grant of the patent: **14.06.2017**
(21) Application number: 13168950.7
(22) Date of filing: 23.05.2013
(51) Int. Cl.: G01N 27/16

(54) **Single element pellistor insensitive to internal and external interferences**
Pellistor mit Einzelelement, der unempfindlich gegenüber internen und externen Störungen ist
Pellisteur à élément unique insensible aux interférences internes et externes

(43) Date of publication of application: 26.11.2014
(73) Proprietor: Honeywell International Inc., Morris Plains, NJ 07950 (US)
(72) Inventor: Cobianu, Cornel, 051434 Bucharest (RO); Serban, Bogdan, 60000 Bucharest (RO)
(74) Representative: Houghton, Mark Phillip

(56) References cited:
- US-A- 5 902 556
- US-A1- 2004 208 789
- US-A1- 2008 282 771
- US-A1- 2011 100 090

## Description

### BACKGROUND

The ability to detect toxic and flammable gasses is important to the safe operation of numerous, highly complex industrial enterprises. Fixed and portable detectors have been used to detect toxic and flammable gases released from industrial processes. In order to reduce detection interruptions, low-power gas sensors have been used to increase portable detector battery life.

Systems are known for the detection of flammable gasses. Such detection systems have included MEMS technologies, however the reliability and long-term stability of these MEMS gas detectors has not yet reached the commercial stage. Such detection systems have also included commercial platinum wire resistance-based pellistor flammable gas sensors, however portable detector battery life can be shortened by the power consumption in platinum wire-based pellistor flammable gas sensors. Such a commercial pellistor consists of a platinum coiled wire covered by bead-like catalyst, which is generally made of metal oxides on which noble metals are deposited. In other cases, a noble metal is incorporated in the body of the bead. The platinum wire works as a heater for the bead, as well as a temperature sensor.

The present commercial flammable gas detector and its signal conditioning is based on a Wheatstone bridge. A commercial half-Wheatstone bridge flammable gas detector can contain two pellistors connected in series: one pellistor is the gas detector itself, while the other pellistor is "poisoned." The poisoned pellistor does not respond to flammable gas, but instead is used to compensate for external parameters (e.g., variations of temperature, humidity, airflow, pressure), as well as for compensation of possible platinum resistance ageing effects. Due to the need for heating the two pellistors to about 500°C, the two pellistors consume most of the electric power in a portable flammable gas detector. An example gas detector is disclosed in U.S. Patent Application Serial No. US 2009/0188297, in which Martin Willet and Martin Jones proposed a method of reducing the power consumption of the flammable gas detectors: replace the dual-pellistor by single element pellistor, a low-power temperature sensor, and a low-power humidity sensor, where the temperature sensor and humidity sensor perform the compensation function of poisoned pellistor.

Platinum wire resistance-based pellistor flammable gas sensors may operate by allowing or causing the flammable gas to combust on the surface of a catalyst and measuring the generated heat, which is proportional to the amount of flammable gas in the ambient. To promote combustion, the bead-like catalyst is heated by electric current flowing through the resistive platinum wire. To measure the generated heat, the resistance of the platinum is measured before and after combustion, and the temperature coefficient of platinum resistance is used to calculate the heat generated by combustion of flammable gas. In addition to the combustion, the net generated heat may be affected by variations in ambient temperature, relative humidity, airflow over the platinum catalyst, or input power. To evaluate the effect of atmospheric variations on the combustion-generated heat, and thus to correctly measure the flammable gas concentration, a temperature sensor and a relative humidity sensor may be used, as shown in the prior art.

### SUMMARY

The present invention provides a system as defined in claim 1. The system may include the features of any one or more of dependent claims 2 to 7.

The present invention also provides a method as defined in claim 8. The method may include the features of any one or more of dependent claims 9 to 11.

A low-cost, batch packaging technology is used for flammable gas detectors. Each flammable gas detector includes a single-element pellistor, a temperature sensor, and a relative humidity sensor. The flammable gas detectors are less sensitive to internal and external interferences than current pellistor-based gas sensors, and are able to provide improved sensor accuracy while reducing electric power consumption.

### BRIEF DESCRIPTION OF THE DRAWINGS

The embodiments of the present invention will be described, by way of example only, by reference to the accompanying drawings in which:
FIG. 1 shows a cross-section through plastic packaged system of sensors used in accordance with one embodiment;
FIG. 2 shows an exploded view of batch package components used in accordance with one embodiment; and
FIG. 3 shows an example flowchart of batch package fabrication process in accordance with one embodiment.

### DETAILED DESCRIPTION

As discussed above, known systems for the detection of flammable gasses have included MEMS technologies and commercial platinum wire-based flammable gas sensors. Improvements have been made in the commercial platinum wire-based flammable gas sensors, including the gradual decrease of the diameter of the platinum wire and other innovative processes for reducing the heat losses by thermal conduction and convection.

In one embodiment, a technological process for a batch fabrication of a plurality of sensor packages is shown. Each package includes a first compartment supported by a first side of the base layer, a pellistor within the first compartment configured to detect a flammable gas, a second compartment within the first side of the base layer, a temperature sensor within the second compartment, and a relative humidity sensor within the second compartment. In one embodiment, information from the temperature sensor and relative humidity sensor can be used to take into consideration the effect of the environmental variations on the pellistor resistance measurements. The temperature sensor and the relative humidity sensors may be chosen for low power consumption.

In one embodiment, the package for a single element pellistor reduces the effect of environmental variations on the pellistor, the temperature sensor, and the relative humidity sensor. For example, the package may be formed to reduce variations in ambient temperature, relative humidity, or airflow over the platinum catalyst. In one embodiment, the package for a single element pellistor may be formed to isolate the single element pellistor from the temperature sensor. For example, the package may be formed to reduce the transfer of heat generated from the pellistor to the temperature sensor. By reducing the transfer of heat, the temperature sensor measurements reflect the external, ambient temperature.

In another embodiment, the package for a single element pellistor reduces the effect of the single element pellistor on the relative humidity sensor. For example, the package should reduce the transfer of water to the relative humidity sensor from the combustion reaction between oxygen and the flammable gas to be detected. By reducing the transfer of water, the relative humidity sensor measurements reflect the external, ambient humidity. In one embodiment, the package for a single element pellistor should reduce the flow of air to the single element pellistor, the temperature sensor, and the relative humidity sensor. By reducing airflow, ambient air may be allowed to reach the sensor surfaces by diffusion, while reducing the effects of air pressure fluctuations due to movements of the portable package.

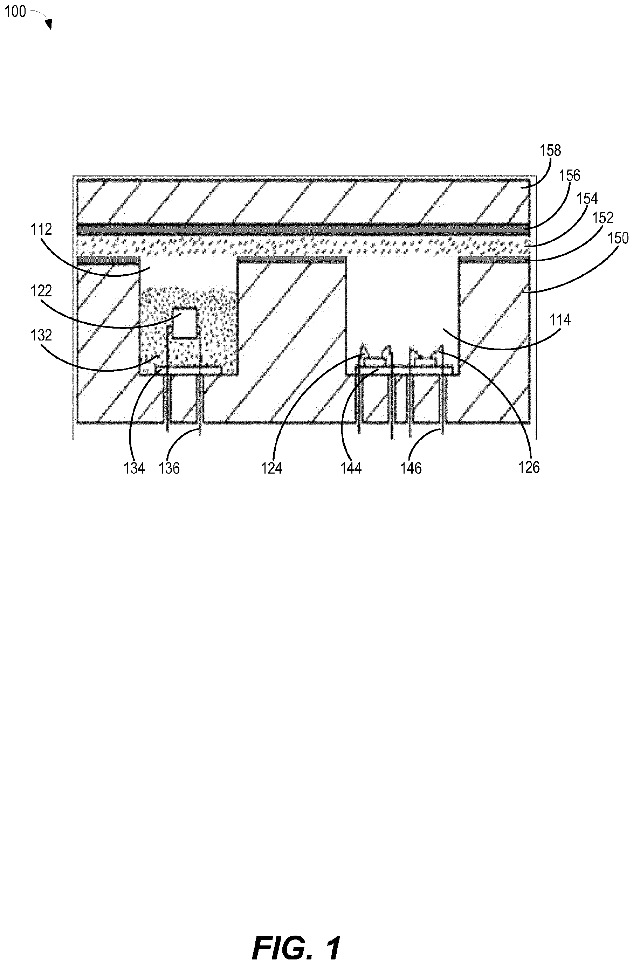

FIG. 1 is a cross-section representation of a gas sensor 100 according to an example embodiment. In the embodiment shown in FIG. 1, the gas sensor 100 includes a first compartment 112 and a second compartment 114. The compartments have a rectangular cross-section, though the cross-section may be circular or any other shape without departing from the scope of this disclosure. In an example, a single element pellistor 122 is located in the first compartment 112, and a temperature sensor 124 and a relative humidity sensor 126 are located in the second compartment 114. In one embodiment, the temperature sensor 124 and the relative humidity sensor 126 can be located in a compartment separate from the single element pellistor 122 to reduce internal interferences, such as heat from the operation of the single element pellistor 122 affecting the temperature or relative humidity sensor measurements.

In one embodiment, the first compartment 112 may be filled partially or completely with an insulating material 132. For example, the insulating material 132 may include a thermally insulating material (e.g., aerogel). In one embodiment, the first compartment 112 may include a printed circuit board (PCB) 134 and electrically conductive wires 136. The electrically conductive wires 136 may pass from the single element pellistor 122 through the first compartment PCB 134 and through the bottom of the gas sensor 100. In another embodiment, the electrically conductive wires 136 may pass from the single element pellistor 122 to the PCB 134, and may be routed electrically through a first compartment PCB via (e.g., a through-hole via, blind via, buried via, etc.) to additional wires that pass through the bottom of the gas sensor 100.

In one embodiment, the second compartment 114 may contain the temperature sensor 124 and the relative humidity sensor 126. In one embodiment, the second compartment 114 may also include a second compartment PCB 144 and electrically conductive wires 146. The electrically conductive wires 146 may pass from the temperature sensor 124 and the relative humidity sensor 126 through the second compartment PCB 144 and through the bottom of the gas sensor 100. In another embodiment, the electrically conductive wires 146 may pass from the sensor to the second compartment PCB 144, and may be routed electrically through a second compartment PCB via (e.g., a through-hole via, blind via, buried via, etc.) to additional wires that pass through the bottom of the gas sensor 100.

In one embodiment, the gas sensor 100 may include multiple layers. For example, the gas sensor 100 may include a base layer 150, a first adhesive layer 152, a buffer layer 154, a second adhesive layer 156, and a lid layer 158. In one embodiment, the base layer 150 and the lid layer 158 may be made of plastic (e.g., acrylonitrile butadiene styrene (ABS), polycarbonate and acrylonitrile butadiene styrene (PC/ABS), etc.). In one embodiment, the buffer layer 154 may be a porous membrane (e.g., polytetrafluoroethylene (PTFE), carbon-reinforced PTFE), and air may flow via diffusion to the first compartment 112 and the second compartment 114 through the buffer layer 154. In an example, the PTFE may be chosen for a specific pore size (e.g., Porex PM 130), so that the PTFE increases the diffusion-limited lateral access to ambient air while reducing air flow transients, thereby allowing rapid pressure equalization during pressure transients, by air coming from all directions. In another example, the transfer of combustion-generated water vapor from the first compartment into the second compartment may be reduced by selecting hydrophobic PTFE. In yet another example, the transfer of combustion-generated water vapor from the first compartment into the second compartment may be reduced by increasing the separation between compartments, where the separation between compartments may be greater than the separation between each compartment and ambient air. In another embodiment, the base layer 150 might be made of PTFE or carbon reinforced PTFE, and air may move by diffusion to the first compartment 112 and the second compartment 114 through one or more walls of the base layer 150.

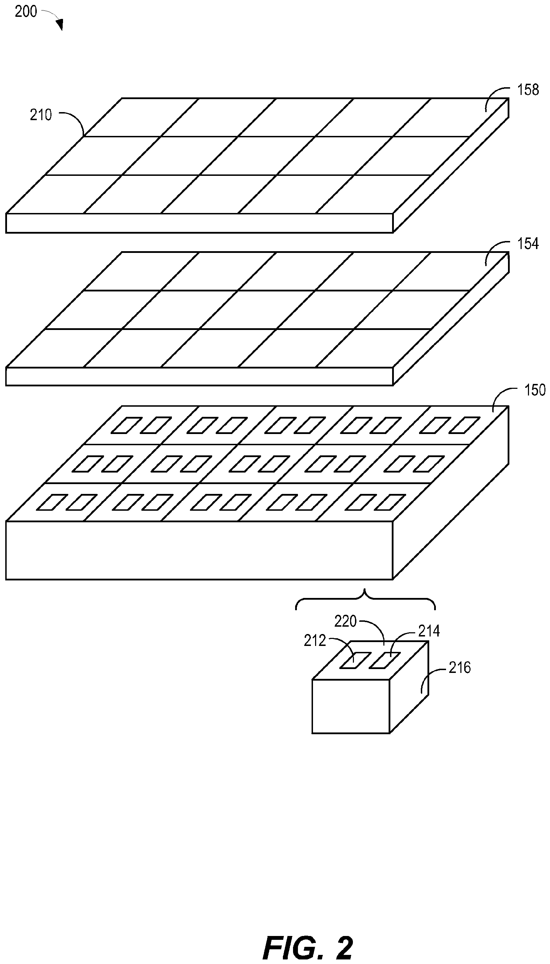

FIG. 2 is an exploded view diagram of batch package components 200 according to an example embodiment for a batch packaging process. In one embodiment, the package sections 200 may include a base layer 150, a first adhesive layer (not shown), a buffer layer 154, a second adhesive layer (not shown), and a lid layer 158. In the embodiment shown in FIG. 2, as an example, each layer is separated into fifteen package sections, though any number of package sections may be used without departing from the scope of this disclosure. In one embodiment, each layer may be printed with cutting lines 210 on the layer. In another embodiment, each layer may be scored along the cutting lines 210 to facilitate separation of individual package sections. Scoring may be performed after the completion of component mounting and layer bonding, including mounting the single element pellistor 122 and the aerogel 132 in the first compartment 112, mounting the humidity sensor 126 and the temperature sensor 144 in the second compartment 114, and bonding together the base layer 150, the buffer layer 154, and lid layer 158.

In the embodiment shown in FIG. 2, each package 220 has a first compartment 212 and a second compartment 214. The arrangement of sensors, PCBs, wires, and insulators within first compartment 212 and second compartment 214 is shown in FIG. 1, as described above. Each package 220 has four sidewalls 216 and a polygonal cross-section, though other physical configurations may be used without departing from the scope of this disclosure. In one embodiment, the size of the package sections may be chosen for structural stability, thermal insulation, or based on other considerations. For example, the base layer 150 may be made of plastic, and the thickness for package sidewalls 216 may be chosen to provide structural stability while insulating sensors from ambient temperature and humidity. In another example, the base layer may be made of PTFE or carbon reinforced PTFE, and the thickness for package sidewalls 216 may be chosen to allow ambient air to reach sensors by diffusion while reducing the amount of ambient air that reaches the sensors through convection.

In one embodiment, modeling and simulation are performed to determine heat transfer from a single element pellistor through package sidewalls 216 for various package geometries, various PTFE porosity values, or various types of aerogel. In another embodiment, modeling and simulation may be used to determine the combination of a package geometry, porosity value, and aerogel type that reduces heat losses due to thermal transfer from the single element pellistor, thereby decreasing power consumption.

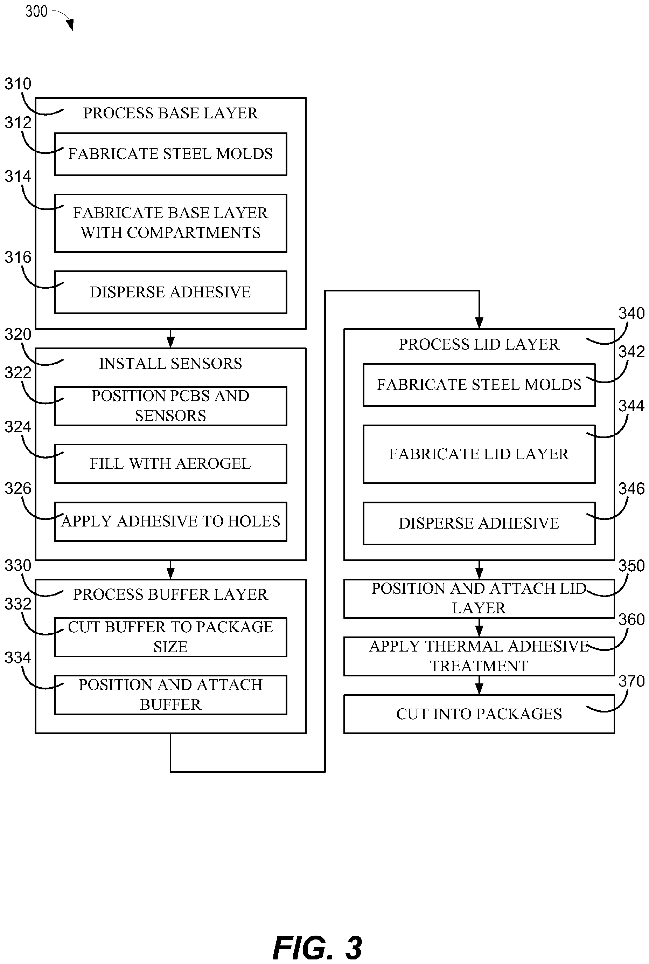

FIG. 3 is a flowchart of an example batch package fabrication process 300 according to an example embodiment. In the embodiment shown in FIG. 3, the batch fabrication process 300 begins with processing the base layer 310. Fabrication of the hardened steel base layer molds 312 includes compartment fabrication on the steel molds. Once the steel molds 312 have been fabricated, they may be used to fabricate multiple, identical, plastic base layers with compartments 314. In an example, the base layer may be fabricated from plastic (e.g., pure acrylonitrile butadiene styrene (ABS), polycarbonate and acrylonitrile butadiene styrene (PC/ABS), etc.) using a plastic manufacturing process (e.g., injection molding, etc.), resulting in multiple, identical, gas sensor packages located on a single plastic base layer. In an example, the gas sensor packages may include holes for electrically conductive wires. Once a base layer with compartments has been fabricated 314, adhesive (e.g., epoxy, etc.) may be dispersed 316 on the upper surface of the base layer.

In one embodiment, following fabrication of the base layer 310, the sensors can be installed 320 into the base layer. Installing sensors 320 can include positioning PCBs and sensors in their respective compartments. In one embodiment, a PCB-mounted single element pellistor may be placed into a first compartment, and a PCB-mounted temperature sensor and a PCB-mounted relative humidity sensor may be placed into a second compartment. For example, the temperature sensor and relative humidity sensor may be mounted on the same PCB, or may be mounted on separate PCBs. In another embodiment, PCBs may be placed into compartments, and the sensors may be electrically connected to the PCBs.

In one embodiment, each sensor may have two or more electrically conductive wires extending from the sensor. As discussed above, the electrically conductive wires may pass from each sensor through a PCB and through holes in the base layer, or may pass from the sensor to the PCB and may be routed through a PCB via (e.g., a through-hole via, blind via, buried via, etc.) to additional wires that pass through holes in the base layer. In one embodiment, after the PCBs and sensors have been positioned in their respective compartments 322, the compartments may be filled with aerogel 324, and adhesive may be used to fill the electrically conductive wire holes 326.

In one embodiment, following sensor installation 320, the buffer layer may be processed 330. For example, processing the buffer layer 330 may include cutting the buffer layer 332 to match the size of the fabricated base layer. In another example, processing of the buffer layer 330 may include positioning and attaching the buffer layer 334 to the base layer. As discussed above, the buffer layer may be made of a porous membrane, such as PTFE.

In one embodiment, following processing the buffer layer 330, the lid layer may be processed 340. Processing of the lid layer 340 may include steps similar to processing of the base layer 310. For example, processing of the lid layer 340 may include fabrication of hardened steel lid layer molds 342, which may be used to fabricate multiple, identical, plastic lid layers 344. Adhesive may be dispersed 346 on the upper surface of the buffer layer or on the lower surface of the lid layer.

In one embodiment, following lid layer processing 340, the lid may be attached to the buffer layer 350. A thermal treatment may be applied to the adhesive 360 to cure the adhesive between layers or in the base layer wire holes. Once the adhesive has been thermally treated 360, the layers may be separated into individual packages 370. For example, the packages may be separated according to the scoring lines depicted in FIG. 2, where each package contains a single-element pellistor, a temperature sensor, and a relative humidity sensor.

Although a few embodiments have been described in detail above, other modifications are possible within the scope of the following claims.

## Claims

1. A gas detector system comprising:
a base layer (150);
a first compartment (112) supported by the base layer (150), the first compartment (112) including a pellistor (122) configured to detect a flammable gas, and
being filled with aerogel (132) configured to reduce heat losses due to thermal transfer from the operation of the pellistor (122);
a second compartment (114) supported by the base layer (150);
a temperature sensor (124) disposed within the second compartment (114);
a relative humidity sensor (126) disposed within the second compartment (114) wherein the relative humidity sensor (126) is separate from the temperature sensor (124);
a lid layer (158); and
a buffer layer (154), wherein the buffer layer:
- includes polytetrafluoroethylene (PTFE);
- is disposed between the base layer (150) and the lid layer (158);
- has an associated first porosity, the first porosity configured to allow diffusion of air to the first and second compartments and to reduce ambient air pressure fluctuation within the first and second compartments; and
- is hydrophobic to reduce transfer of combustion-generated water vapor from the first compartment into the second compartment.

2. The gas detector system of claim 1, wherein:
the buffer layer is fixedly connected to the second side of the base layer using adhesive bonding; and
the lid layer is fixedly connected to the buffer layer using adhesive bonding.

3. The gas detector system of claim 1, wherein the base layer, the buffer layer, or the lid layer is scored to facilitate separation of packages.

4. The gas detector system of claim 1,
wherein the base layer includes PTFE;
wherein the base layer PTFE has an associated second porosity; and
wherein the second porosity is configured to allow diffusion of air through at least one wall of the package and to reduce ambient air pressure fluctuation within the first and second compartments.

5. The gas detector system of claim 1,
wherein the base layer has an associated thermal conductivity, and
wherein the base layer thermal conductivity and a separation between the first and second compartment are selected to reduce transfer of heat and water vapor from the first compartment into the second compartment.

6. The gas detector system of claim 1, wherein the base layer and the lid layer are manufactured using an injection molding process.

7. The gas detector system of claim 1, wherein the base layer and the lid layer include polycarbonate/acrylonitrile butadiene styrene (PC/ABS).

8. A batch package fabrication method comprising:
fabricating a base layer, wherein the base layer includes one or more packages, and wherein each of the one or more packages includes a first compartment and a second compartment;
fabricating a lid layer;
fabricating a buffer layer, wherein the buffer layer:
- includes polytetrafluoroethylene (PTFE);
- is to be disposed between the base layer and the lid layer;
- has an associated first porosity, the first porosity configured to allow diffusion of air to the first and second compartments and to reduce ambient air pressure fluctuation within the first and second compartments; and
- is hydrophobic to reduce transfer of combustion-generated water vapor from the first compartment into the second compartment;
arranging a pellistor within the first compartment, wherein arranging the pellistor within the first compartment includes filling the first compartment with aerogel, wherein the pellistor is configured to detect a flammable gas;
arranging a temperature sensor and a relative humidity sensor within the second compartment;
bonding the buffer layer to the base layer, wherein the buffer layer encloses the compartments;
bonding the lid layer to the buffer layer; and
separating the base layer, buffer layer, and lid layer into the one or more packages.

9. The batch package fabrication method of claim 8, wherein fabricating the base layer includes fabricating a separation between the first compartment and the second compartment to reduce transfer of heat and water vapor from the first compartment into the second compartment.

10. The batch package fabrication method of claim 8, wherein fabricating the base layer, buffer layer, or lid layer includes fabrication by injection molding.

11. The batch package fabrication method of claim 8, wherein fabricating the base layer, buffer layer, or lid layer includes scoring the layers to facilitate separation of packages.

## Patentansprüche

1. Gasdetektorsystem, umfassend:
eine Grundschicht (150);
eine erste Kammer (112), die von der Grundschicht (150) abgestützt wird, wobei die erste Kammer (112) einen Pellistor (122) aufweist, der zum Erkennen von entflammbarem Gas konfiguriert ist und der mit Aerogel (132) gefüllt ist, das zum Reduzieren von Wärmeverlusten aufgrund des Wärmetransfers vom Betrieb des Pellistors (122) konfiguriert ist;
eine zweite Kammer (114), die von der Grundschicht (150) abgestützt wird;
einen Temperatursensor (124), der innerhalb der zweiten Kammer (114) angeordnet ist;
einen relativen Luftfeuchtigkeitssensor (126), der innerhalb der zweiten Kammer (114) angeordnet ist, wobei der relative Luftfeuchtigkeitssensor (126) getrennt vom Temperatursensor (124) ist;
eine Deckelschicht (158);
und eine Pufferschicht (154), wobei die Pufferschicht:
- Polytetrafluorethylen (PTFE) aufweist;
- zwischen der Grundschicht (150) und der Deckelschicht (158) angeordnet ist;
- eine zugehörige erste Porosität aufweist, die erste Porosität zum Ermöglichen der Diffusion von Luft zur ersten und zweiten Kammer und zum Reduzieren der Umgebungsluft-Druckschwankung innerhalb der ersten und zweiten Kammer konfiguriert; und
- hydrophob ist, um den Transfer von verbrennungserzeugtem Wasserdampf von der ersten Kammer in die zweite Kammer zu reduzieren.

2. Gasdetektorsystem nach Anspruch 1, wobei:
die Pufferschicht fest mit der zweiten Seite der Grundschicht mithilfe einer Klebeverbindung verbunden ist; und
die Deckelschicht fest mit der Pufferschicht verbunden ist, die eine Klebeverbindung verwendet.

3. Gasdetektorsystem nach Anspruch 1, wobei die Grundschicht, die Pufferschicht oder die Deckelschicht vorgestanzt sind, um die Trennung von Packungen zu erleichtern.

4. Gasdetektorsystem nach Anspruch 1,
wobei die Grundschicht PTFE aufweist;
wobei die Grundschicht aus PTFE eine zugehörige zweite Porosität aufweist; und
wobei die zweite Porosität zum Ermöglichen der Diffusion von Luft durch mindestens eine Wand der Packung und zum Reduzieren der Umgebungsluft-Druckschwankung innerhalb der ersten und der zweiten Kammer konfiguriert ist.

5. Gasdetektorsystem nach Anspruch 1,
wobei die Grundschicht eine zugehörige Wärmeleitfähigkeit aufweist und
wobei die Grundschicht-Wärmeleitfähigkeit und eine Trennung zwischen der ersten und zweiten Kammer ausgewählt werden, um den Transfer von Wärme und Wasserdampf von der ersten Kammer in die zweite Kammer zu reduzieren.

6. Gasdetektorsystem nach Anspruch 1, wobei die Grundschicht und die Deckelschicht unter Verwendung eines Spritzgussverfahrens hergestellt werden.

7. Gasdetektorsystem nach Anspruch 1, wobei die Grundschicht und die Deckelschicht Polycarbonat-/Acrylnitrilbutadienstyrol (PC/ABS) aufweisen.

8. Batchpackung-Herstellungsverfahren, umfassend:
Herstellen einer Grundschicht, wobei die Grundschicht eine oder mehrere Packungen aufweist und wobei jede der einen oder mehreren Packungen eine erste Kammer und eine zweite Kammer aufweist;
Herstellen einer Deckelschicht;
Herstellen einer Pufferschicht, wobei die Pufferschicht:
- Polytetrafluorethylen (PTFE) aufweist;
- zwischen der Grundschicht und der Deckelschicht anzuordnen ist;
- eine zugehörige erste Porosität aufweist, die erste Porosität zum Ermöglichen der Diffusion von Luft zur ersten und zweiten Kammer und zum Reduzieren der Umgebungsluft-Druckschwankung innerhalb der ersten und zweiten Kammer konfiguriert; und
- hydrophob ist, um den Transfer von verbrennungserzeugtem Wasserdampf von der ersten Kammer in die zweite Kammer zu reduzieren;
Anordnen eines Pellistors innerhalb der ersten Kammer, wobei das Anordnen des Pellistors innerhalb der ersten Kammer das Füllen der ersten Kammer mit Aerogel beinhaltet, wobei der Pellistor konfiguriert zum Erkennen eines entflammbaren Gases konfiguriert ist;
Anordnen eines Temperatursensors und eines relativen Luftfeuchtigkeitssensors innerhalb der zweiten Kammer;
Verbinden der Pufferschicht mit der Grundschicht, wobei die Pufferschicht die Kammern umgibt;
Verbinden der Deckelschicht mit der Pufferschicht; und
Trennen der Grundschicht, Pufferschicht und Deckelschicht in eine oder mehrere Packungen.

9. Batchpackung-Herstellungsverfahren nach Anspruch 8, wobei die Herstellung der Grundschicht das Herstellen einer Trennung zwischen der ersten Kammer und der zweiten Kammer zum Reduzieren des Transfers von Wärme und Wasserdampf von der ersten Kammer in die zweite Kammer beinhaltet.

10. Batchpackung-Herstellungsverfahren nach Anspruch 8, wobei das Herstellen der Grundschicht, der Pufferschicht oder Deckelschicht das Herstellen durch Spritzgießen beinhaltet.

11. Batchpackung-Herstellungsverfahren nach Anspruch 8, wobei das Herstellen der Grundschicht, der Pufferschicht oder der Deckelschicht das Vorstanzen der Schichten zum Erleichtern der Trennung der Packungen beinhaltet.

## Revendications

1. Système de détection de gaz comprenant :
une couche de base (150) ;
un premier compartiment (112) supporté par la couche de base (150), le premier compartiment (112) comportant un pellistor (122) configuré pour détecter un gaz inflammable, et étant rempli avec un aérogel (132) configuré pour réduire les pertes thermiques dues au transfert thermique découlant du fonctionnement du pellistor (122) ;
un deuxième compartiment (114) supporté par la couche de base (150) ;
un capteur de température (124) disposé à l'intérieur du deuxième compartiment (114) ;
un capteur d'humidité relative (126) disposé à l'intérieur du deuxième compartiment (114), le capteur d'humidité relative (126) étant séparé du capteur de température (124) ;
une couche de couvercle (158) ; et
une couche tampon (154), la couche tampon :
- comportant du polytétrafluoroéthylène (PTFE) ;
- étant disposée entre la couche de base (150) et la couche de couvercle (158) ;
- ayant une première porosité associée, la première porosité configurée pour permettre la diffusion d'air jusqu'aux premier et deuxième compartiments et pour réduire les fluctuations de pression d'air ambiant à l'intérieur des premier et deuxième compartiments ; et
- étant hydrophobe pour réduire le transfert de vapeur d'eau générée par combustion du premier compartiment au deuxième compartiment.

2. Système de détection de gaz de la revendication 1, dans lequel :
la couche tampon est assemblée de façon fixe au deuxième côté de la couche de base au moyen d'un collage par adhésif ; et
la couche de couvercle est assemblée de façon fixe à la couche tampon au moyen d'un collage par adhésif.

3. Système de détection de gaz de la revendication 1, dans lequel la couche de base, la couche tampon ou la couche de couvercle est incisée pour faciliter la séparation de boîtiers.

4. Système de détection de gaz de la revendication 1,
dans lequel la couche de base comporte du PTFE ;
dans lequel le PTFE de la couche de base a une deuxième porosité associée ; et
dans lequel la deuxième porosité est configurée pour permettre la diffusion d'air à travers au moins une paroi du boîtier et pour réduire les fluctuations de pression d'air ambiant à l'intérieur des premier et deuxième compartiments.

5. Système de détection de gaz de la revendication 1,
dans lequel la couche de base a une conductivité thermique associée, et
dans lequel la conductivité thermique de la couche de base et une séparation entre le premier et le deuxième compartiment sont choisies pour réduire le transfert de chaleur et de vapeur d'eau du premier compartiment au deuxième compartiment.

6. Système de détection de gaz de la revendication 1, dans lequel la couche de base et la couche de couvercle sont fabriquées au moyen d'un procédé de moulage par injection.

7. Système de détection de gaz de la revendication 1, dans lequel la couche de base et la couche de couvercle comportent du polycarbonate/acrylonitrile-butadiène-styrène (PC/ABS).

8. Procédé de fabrication de boîtiers par lots comprenant les étapes suivantes :
fabriquer une couche de base, la couche de base comportant un ou plusieurs boîtiers, et le ou chacun des boîtiers comportant un premier compartiment et un deuxième compartiment ;
fabriquer une couche de couvercle ;
fabriquer une couche tampon, la couche tampon :
- comportant du polytétrafluoroéthylène (PTFE) ;
- devant être disposée entre la couche de base et la couche de couvercle ;
- ayant une première porosité associée, la première porosité configurée pour permettre la diffusion d'air jusqu'aux premier et deuxième compartiments et pour réduire les fluctuations de pression d'air ambiant à l'intérieur des premier et deuxième compartiments ; et
- étant hydrophobe pour réduire le transfert de vapeur d'eau générée par combustion du premier compartiment au deuxième compartiment ;
placer un pellistor à l'intérieur du premier compartiment, la mise en place du pellistor à l'intérieur du premier compartiment comportant le remplissage du premier compartiment avec un aérogel, le pellistor étant configuré pour détecter un gaz inflammable ;
placer un capteur de température et un capteur d'humidité relative à l'intérieur du deuxième compartiment ;
coller la couche tampon à la couche de base, la couche tampon refermant les compartiments ;
coller la couche de couvercle à la couche tampon ; et
séparer la couche de base, la couche tampon et la couche de couvercle pour obtenir le ou les boîtiers.

9. Procédé de fabrication de boîtiers par lots de la revendication 8, dans lequel la fabrication de la couche de base comporte la fabrication d'une séparation entre le premier compartiment et le deuxième compartiment pour réduire le transfert de chaleur et de vapeur d'eau du premier compartiment au deuxième compartiment.

10. Procédé de fabrication de boîtiers par lots de la revendication 8, dans lequel la fabrication de la couche de base, de la couche tampon ou de la couche de couvercle comporte une fabrication par moulage par injection.

11. Procédé de fabrication de boîtiers par lots de la revendication 8, dans lequel la fabrication de la couche de base, de la couche tampon ou de la couche de couvercle comporte l'incision des couches pour faciliter la séparation de boîtiers.
